# EUROPEAN PATENT SPECIFICATION

(11) **EP 1 169 925 B1**
(45) Date of publication and mention of the grant of the patent: **12.05.2004**
(21) Application number: 00830447.9
(22) Date of filing: 26.06.2000
(51) Int. Cl.: A23L 1/212, A23L 1/20, A23L 1/105, A23C 9/133, A23C 9/123, A23L 1/03

(54) **Foodstuffs containing a fermented vegetable matrix and relevant preparation process**
Lebensmittel mit fermentierten Gemüsen Matrix und Verfahren zur Herstellung desselben
Produits alimentaires contenant des matrix de legumes fermentes et procede de preparation

(43) Date of publication of application: 09.01.2002
(73) Proprietor: Sitia-Yomo S.p.A., 20123 Milano (IT)
(72) Inventor: Cavaliere Vesely, Renata Maria Anna, Milano (IT); Maiocchi, Gianluigi, Codogno (MI) (IT); Vesely, Marco Emilio, Milano (IT); Vesely, Leonardo, Milano (IT); Bertuccia, Bruna Bianchi, Milano (IT)
(74) Representative: Tansini, Elio Fabrizio

(56) References cited:
- US-A- 4 298 619
- US-A- 6 056 979
- DATABASE WPI Section Ch, Week 200035 Derwent Publications Ltd., London, GB; Class D13, AN 2000-409274 XP002161337 & RU 2 136 175 C (UNIV MOSC APPL BIOTECHN) , 10 September 1999 (1999-09-10)
- DATABASE WPI Section Ch, Week 199414 Derwent Publications Ltd., London, GB; Class D13, AN 1994-114253 XP002161338 & JP 06 062840 A (ISHIKAWA KEN), 8 March 1994 (1994-03-08)

## Description

The present invention relates to a new generation of foodstuffs, having high nutritional features, to be obtained through combination of a milk-based product and a vegetable food fermented with selected lactic bacteria and bifidobacteria as well as to a process for preparing said combined foodstuffs.

In addition, the present invention relates to use of selected lactic bacteria and bifidobacteria in a fermentation process of vegetable matrices for food.

It is known that in the most recent years, the acquired knowledge in the nutritional and health field has been welcomed with great attention by consumers.

Nowadays, consumers have developed a more careful attitude towards health problems and are increasingly more aware of the correlation existing between food and health.

A consumer is orientated towards favouring the choice of healthy foods having high quality and naturalness features and showing a differentiated nutritional and biological value for the different consumers' bands such as: children, teenagers, young people, grown-ups and elderly people.

Requirement for healthy foodstuffs with a higher and more complete nutritional profile has given rise to a wide variety of the so-called "supplemented" foodstuffs.

Belonging to this food category are foodstuffs of various nature, to which one or more external substances are added.

Known on the market is the existence of milk-based or milk-derived foodstuffs that are supplemented with the addition of external substances. In particular, in the dairy field there are products derived from fermented milk, such as yoghurt, that are supplemented with the addition of a wide variety of foodstuffs selected from: mineral salts, vitamins, cereals, sugars, fruit and others.

At all events, a supplemented foodstuff is a food obtained by a mere addition of one or more food components. Consequently, the nutritional value of such a supplemented food can be considered as the sum of the individual nutritional values of each component.

For instance, a food derived from the combination of fermented milk with ingredients such as pasteurized fruit in pieces or cereals is an excellent healthy and nutritious food giving the consumer a good nutritional supply.

However, there are some beneficial nutrients naturally present in fruit or cereals for example, which are in very low concentrations or in a chemical form that can be badly assimilated by an organism.

This category of nutrients taken in this form brings a fair nutritional contribution to a consumer. Consequently, the consumer does not fully take advantage of the whole natural and biological nutritional heritage present in vegetable foods.

Alternatively, some beneficial natural nutrients present in fruit or cereals for example, are not immediately bio-available for an organism but they need further biochemical processes capable of converting them from a non-assimilable (complex) form to an assimilable form (which is simpler and therefore bio-available).

Consequently, there is a requirement for an increasingly greater availability on the market of new food categories having a high nutritional and functional value, so as to substantially improve the consumers' quality of life, irrespective of their age.

In particular, there is a need to make available new food categories efficiently satisfying specific nutritional and healthy requirements.

Document US 4,298,619 relates to foods and drinks containing bifidobacteria which are produced by inoculating and cultivating bifidobacteria or a mixture of bifidobacteria and lactic acid bacteria in a medium containing a-starch-transformed rice and bifidobacteria-fermentable sugars, and processing the resultant cultivated medium to produce said foods and drinks containing bifidobacteria.

Document RU 2136175 (XP-002161337) relates to an improved method of preparing a food addition carrot, cabbage and wheat bran. A mixture is homogenized, heated by pasteurization and fermented using microorganisms *Bifidobacterium adolescens MC-42, Propionibacterium schermanii E-6, Lactobacillus acidophilus, Lactobacillus plantarum 31.* Said addition provides recovery of the human gastroenteric tract ecosystem.

Document US 6,056,979 relates to a strain of *Streptococcus thermophilus* deposited at CNCM No. 1-1477. Also disclosed is the use of the S. thermophilus strains to produce fermented milk products and the products produced thereby.

Document JP 06 062840 (XP-002161338) relates to a method for preparing fermented fruit juice drink.The fruit juice is fermented using lactic acid bacteria without removing fermentation ihnibiting substance, polyphenol or without pH adjustment for fruit juice having low pH.

One of the aims of the present invention is to provide a process for preparing a fermented vegetable foodstuff having a high nutritional and healthy profile.

Another aim of the present invention is to provide a fermented vegetable foodstuff for the foods.

A still further aim of the present invention is to provide a healthy food containing metabolites having a high nutritional and beneficial value.

The foregoing and further aims that will become more apparent from the following detailed description have been achieved by the Applicant that has surprisingly found a technological process for exploiting the natural active ingredients present in selected vegetable matrices.

Accordingly, it is a first object of the present invention to provide a process for preparing a fermented vegetable food obtained through fermentation with selected lactic bacteria and bifidobacteria of a vegetable matrix, the essential features of which are set out according to claim 1.

Other preferred embodiments are described in the appended dependent claims.

Further technical features and the advantages of the invention will be best understood from the following detailed description.

The Applicant has developed a technological fermentation process in which selected pasteurized vegetable matrices preferably chosen from the substrates of fruit, cereals and vegetables or greens, are treated, under particular operating conditions, with selected lactic bacteria or bifidobacteria strains to obtain and exploit the active ingredients naturally present in the substrates.

Preferably, one or more of the vegetable substrates can be previously ground and sieved by a refining machine, to obtain a uniform vegetable matrix.

Preferably, said vegetable matrix comprising at least one or more vegetable substrates selected from the group consisting of cereals, fruit and vegetables, is arranged in a containing means.

Preferably the fruit and vegetables substrates are selected from apple purée, pear purée, carrot purée and the cereal substrate can be wheat germ, with reference in particular to its active substances.

Advantageously, micronutrients such as vitamin E, vitamin C and calcium lactate can be added to the ground and refined vegetable matrix.

Mineral salts and/or trace elements selected from the group comprising zinc, iron, magnesium, selenium, potassium and phosphor can be optionally added.

Addition of the above mentioned micronutrients and/or mineral salts and trace elements can take place for example before the pasteurization step or preferably after the pasteurization step.

The apple purée is a substrate containing vitamin C, mineral salts and trace elements such as potassium and fibres.

The carrot purée is a substrate rich in vitamins and provitamins such as carotenes, mineral salts and trace elements, fibres and antioxidant substances such as β-carotene.

The wheat germ, with reference to its active substances, is a substrate stimulating growth of the probiotic micro flora (prebiotic effect) with a reduced gas evolvement. The wheat germ has a high soluble-fibre content, of the oligosaccharide and pentosan type and has an important folic-acid and vitamin-E content.

Subsequently, the vegetable matrix is submitted to a pasteurisation step at a temperature included between 80 and 95°C. Preferably, pasteurisation is carried out over a period of time included between 30 and 300 seconds.

Pasteurisation of the vegetable matrix is important in view of eliminating microbes and preparing it to subsequent fermentation.

At the end of the pasteurisation step, the vegetable matrix temperature is reset to a value included between 30 and 45°C, i.e. a value suitable for correct fermentation.

Subsequently, a mixture of strains of selected bacteria of the "starter" type is added to the pasteurized vegetable matrix cooled to the fermentation temperature of 30-45°C, for the purpose of triggering the fermentation process.

In a prefered embodiment the bacteria mixture consists of:
- *Lactobacillus delbrueckii subsp. bulgaricus;*
- *Streptococcus thermophilus;*
- *Lactobacillus acidophilus;*
- *Lactobacillus casei;*
- *Bifidobacterium infantis;*
- *Bifidobacterium breve;*
- *Bifidobacterium longum.*

For preparation of the bacteria mixtures employed in the present invention, known strains of the above mentioned species can be employed.

Particularly advantageous results have been achieved with use of the following strains:
- *Lactobacillus delbrueckii subsp. bulgaricus AY*/*CSL*: LMG P-17224
- *Streptococcus thermophilus 9Y*/*CSL*: LMG P-17225
- *Bifidobacterium longum BI10*/*CSL*: LMG P-17500
- *Bifidobacterium breve Bbr8*/*CSL*: LMG P-17501
- *Lactobacillus casei 101*/*37*/*CLS*: LMG P-17504
- *Bifidobacterium infantis BI1*/*CSL*: LMG P-17502
- *Lactobacillus acidophilus K8*/*CSL*: LMG P-17503.

Said bacteria strains denoted by "LMG P-" have been deposited with the recognized international institution BCCM/LMG collection of the University of Gent, Ledeganokstraat 35, B-9000 Gent, Belgium.

In addition, the stated cultures in the concentrations set out in the present invention are accessible to the' public and commercially available with the Centro Sperimentale del Latte S.p.A., Strada per Merlino, 3 - ZELO BUON PERSICO (LODI) - ITALY.

Advantageously, a bacteria mixture including 3 to 12 g of ferments per 100 kg of vegetable matrix is added.

For instance, a mixture of lyophilized ferments is employed which consists of:
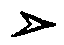 *Lactobacillus acidophilus* 20 to 40%;
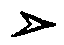 *Lactobacillus casei* 20 to 40%; *and*
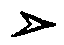 *Bifidobacterium infantis, Bifidobacterium breve, Bifidobacterium longum* 20 to 60%.

Said bacteria strains for the fermentation process of the vegetable matrix are introduced in a concentration included between 1 and 20 million CFU/g of vegetable matrix (CFU meaning: colony forming units); preferably to a concentration included between 1 and 10 million CFU/g of vegetable matrix; more preferably to a concentration included between 1.5 and 5 million CFU/g of vegetable matrix.

Preferably, the bacteria strains that are employed in the fermentation process being the subject matter of the present invention have a concentration as set out' hereinbelow:
- the lyophilized culture of *Lactobacillus delbrueckii subsp. bulgaricus* is at least 20 thousand million CFU/g of lyophilized matter; more preferably it is included between 40 and 80 thousand million CFU/g of lyophilized matter;
- the lyophilized culture of *Streptococcus thermophilus* is at least 50 thousand million CFU/g of lyophilized matter; more preferably it is included between 100 and 200 thousand million CFU/g of lyophilized matter;
- the lyophilized culture of *Lactobacillus acidophilus* is at least 50 thousand million CFU/g of lyophilized matter; more preferably it is included between 100 and 200 thousand million CFU/g of lyophilized matter;
- the lyophilized culture of *Lactobacillus casei* is at least 50 thousand million CFU/g of lyophilized matter; more preferably it is included between 100 and 200 thousand million CFU/g of lyophilized matter;
- the lyophilized culture of *Bifidobacterium infantis, Bifidobacterium breve, Bifidobacterium longum* is at least 50 thousand million CFU/g of lyophilized matter; more preferably it is included between 100 and 300 thousand million CFU/g of lyophilized matter.

The lactic bacteria and bifidobacteria mixture comprises:
- *Lactobacillus acidophilus;*
- *Lactobacillus casei;* and
- a mixed culture made up of: *Bifidobacterium infantis, Bifidobacterium breve,* and *Bifidobacterium longum.*

Preferably, the *Lactobacillus delbrueckii subsp. bulgaricus* and *Streptococcus thermophilus* are added simultaneously as a mixed culture and have the respective concentration values as above stated.

Preferably, the fermentation step is carried out over a period of time included between 5 and 25 hours to a temperature ranging from 30 to 45°C, more preferably over a period of time included between 8 and 15 hours to a temperature ranging from 35 to 40°C.

In the fermentation step of the vegetable matrix, by use of selected lactic bacteria and bifidobacteria strains, different active substances (metabolic substances derived from fermentation of bacteria on the vegetable matrix) are formed.

The metabolites originating from said fermentation steps are natural nutrients with a beneficial effect for the human organism. In addition, as a result of said fermentation step, some substances contained in the vegetable substrates are made more available as nutrients.

Among the substances produced or made more available by the fermentation process of vegetable matrices there are: lactic acid, some bioactive peptides, essential amino acids such as arginine and lysine, fatty acids in short chains such as acetic acid, propionic acid and butyric acid, monosaccharides and oligosaccharides such as glucose, fructose, sucrose, melitose, vitamins of group B, vitamin E and folic acid, mineral salts/trace elements such as potassium, magnesium and phosphor.

It is a second object of the present invention to provide a fermented vegetable food, obtained by fermentation of a vegetable matrix with selected lactic bacteria and bifidobacteria, the essential features of which are set out in the appended independent claim 8.

Other preferred embodiments are described in the appended dependent claims.

Preferably, the fermented vegetable food comprises the following components:
- one or more fermented vegetable substrates selected from: apple purée, pear purée, carrot purée and wheat germs;
- a mixture of bacteria strains consisting of:
   - *Lactobacillus delbrueckii subsp. bulgaricus;*
   - *Streptococcus thermophilus;*
   - *Lactobacillus acidophilus;*
   - *Lactobacillus casei;*
   - *Bifidobacterium infantis;*
   - *Bifidobacterium breve;*
   - *Bifidobacterium longum; and*
- one or more active substances (obtained from fermentation of one or more vegetable substrates with bacteria), belonging to the group comprising:
   - lactic acid, some bioactive peptides, essential amino acids such as arginine and lysine, fatty acids in short chains such as acetic acid, propionic acid and butyric acid, monosaccharides and oligosaccharides such as glucose, fructose, sucrose, melitose, vitamins of group B, vitamin E and folic acid, mineral salts/trace elements such as potassium, magnesium and phosphor.

Preferably, said bacteria strains are present in the fermented vegetable food to a concentration as specified below:
- the lyophilized culture of *Lactobacillus delbrueckii subsp. bulgaricus* is preferably included between 10 and 100 million CFU/g of fermented vegetable food; more preferably it is included between 25 and 75 million CFU/g of fermented vegetable food;
- the lyophilized culture of *Streptococcus thermophilus* is preferably included between 10 and 100 million CFU/g of fermented vegetable food; more preferably it is included between 25 and 75 million CFU/g of fermented vegetable food;
- the lyophilized culture of *Lactobacillus acidophilus* is preferably included between 10 and 100 million CFU/g of fermented vegetable food; more preferably it is included between 25 and 75 million CFU/g of fermented vegetable food;
- the lyophilized culture of *Lactobacillus casei* is preferably included between 10 and 100 million CFU/g of fermented vegetable food; more preferably it is included between 25 and 75 million CFU/g of fermented vegetable food;
- the lyophilized culture of *Bifidobacterium infantis, Bifidobacterium breve, Bifidobacterium longum* is preferably included between 10 and 100 million CFU/g of fermented vegetable food; more preferably it is included between 25 and 75 million CFU/g of fermented vegetable food.

It is a third object of the present invention to provide a process for preparation of a functional combined food of a new generation, having a high nutritional and healthy value obtained from combination of a fermented-milk-based product and a separately-fermented vegetable food, the essential features of which are set out in the appended independent claim 13.

Other preferred embodiments are described in the appended dependent claims.

The Applicant has also developed a process for preparing a combined food having a high nutritional power, comprising a milk-based product and a fermented vegetable food.

Practically, once the fermented vegetable food has been prepared, by the above described process for example, the process for preparing said combined food involves a further step in which the fermented vegetable food is dispersed in a fermented milk-based product.

Mixtures of bacteria strains as above reproduced have appeared particularly advantageous.

Preferably, said milk-based product is selected from fermented milk derivatives (yoghurt) or milk to which lactic bacteria or bifidobacteria are added.

It is a fourth object of the present invention to provide a combined food having a high nutritional and healthy power, comprising a fermented-milk-based product and a separately-fermented vegetable food, the essential features of which are set out in the appended independent claim 20.

Other preferred embodiments are described in the appended dependent claims.

Preferably, the combined food obtained by the above described process comprises the following components;
- a milk-based product selected from fermented milk derivatives (yoghurt, for example) or milk added with lactic bacteria or bifidobacteria; preferably the milk-based product is in an amount ranging from 75 to 95% with respect to the weight of the combined food;
- one or more vegetable substrates, fermented with bacteria, selected from the group consisting of cereals, vegetables and fruit; preferably the vegetable matrix is in a concentration included between 5 and 25% with respect to the weight of the combined food;
- a mixture of bacteria strains consisting of:
   - *Lactobacillus delbrueckii subsp. bulgaricus;*
   - *Streptococcus thermophilus;*
   - *Lactobacillus acidophilus;*
   - *Lactobacillus casei;*
   - *Bifidobacterium infantis;*
   - *Bifidobacterium breve;* and
   - *Bifidobacterium longum*.

Preferably, said bacteria strains are present in the combined food in a concentration as stated below:
- the lyophilized culture of *Lactobacillus delbrueckii subsp. bulgaricus* is preferably included between 1 and 10 million CFU/g of combined food;
- the lyophilized culture of *Streptococcus thermophilus* is preferably included between 300 and 800 million CFU/g of combined food;
- the lyophilized culture of *Lactobacillus acidophilus* is preferably included between 1 and 10 million CFU/g of combined food;
- the lyophilized culture of *Lactobacillus casei* is preferably included between 1 and 5 million CFU/g of combined food;
- the lyophilized culture of *Bifidobacterium infantis, Bifidobacterium breve, Bifidobacterium longum* is preferably included between 1 and 10 million CFU/g of combined food;
- one or more metabolic active substances obtained from fermentation belonging to the group comprising: lactic acid, some bioactive peptides, essential amino acids such as arginine and lysine, fatty acids in short chains such as acetic acid, propionic acid and butyric acid, monosaccharides and oligosaccharides such as glucose, fructose, sucrose, melitose, vitamins of group B, vitamin E and folic acid, mineral salts/trace elements such as potassium, magnesium and phosphor.

The lactic bacteria and bifidobacteria mixture comprises:
- *Lactobacillus acidophilus;*
- *Lactobacillus casei;* and
- a mixed culture consisting of: *Bifidobacterium infantis; Bifidobacterium breve;* and *Bifidobacterium longum.*

Preferably, the *Lactobacillus delbrueckii subsp. bulgaricus* and *Streptococcus thermophilus* are added simultaneously as a mixed culture, with their respective concentration values as above stated.

The selected strains of the above mentioned bacteria are capable of converting non-digestible carbohydrates into metabolites that can be easily utilized by the organism.

It is a further object of the present invention to provide use of selected lactic bacteria and bifidobacteria in a process for preparation of fermented vegetable matrices, as set out in the appended independent claim 22.

Other preferred embodiments are described in the appended dependent claims.

In a preferred embodiment is provided the use of a mixture of bacteria strains consisting of: *Lactobacillus delbrueckii subsp. bulgaricus; Streptococcus thermophilus; Lactobacillus acidophilus; Lactobacillus casei; Bifidobacterium infantis; Bifidobacterium breve;* and *Bifidobacterium longum* in the fermentation processes of vegetable matrices.

It is an object of the present invention to provide use of a lactic bacteria and bifidobacteria mixture comprising:
- *Lactobacillus acidophilus;*
- *Lactobacillus casei;* and
a mixed culture made up of: *Bifidobacterium infantis, Bifidobacterium breve,* and *Bifidobacterium longum.*

Preferably, the *Lactobacillus delbrueckii subsp. bulgaricus* and *Streptococcus thermophilus* are added simultaneously as a mixed culture, with the respective concentration values as above reproduced.

Generally, the fermented vegetable food obtained by the subject process can be added as an ingredient in the preparation of dairy foods, thereby increasing the nutritional and healthy value of the final product.

Therefore, an advantage of the present invention is given by the fact that the nutritive and healthy value of dairy specialities can be further increased by adding thereto substrates from the vegetable world such as fruit and cereals, previously separately fermented with selected bacteria strains. In fact, by said fermentation process the Applicant is capable of fully exploiting all beneficial substances already naturally existing in the vegetable substrates. In addition, due to said fermentation process, active substances (natural active ingredients) are originated that, in combination with the naturally-existing beneficial substances, complete the nutritional value of the fermented vegetable food.

Supplementing a dairy food with separately-fermented vegetable substrates allows metabolites of clear and important nutritional and healthy role to be added to said food and further enables achievement by a synergistic targeted action, of final foods rich in nutrients in a highly bio-available form and also containing specific probiotic bacteria in high amounts with proved beneficial properties in the most suitable form and amount for the different consumers' bands, such as children, teenagers, grown-ups and elderly people.

Another advantage of the present invention resides in that a food obtained as above mentioned is a symbiotic "functional" food of a new generation. In fact, these functional foods also take a prebiotic function, i.e. they stimulate growth both of the autochthonous intestinal flora and the probiotic bacteria (lactic bacteria and bifidobacteria added to the food), thereby maintaining an equilibrium in the intestinal micro-ecosystem.

Some examples of preferred but not limiting embodiments of the present invention are given hereinafter.

### EXAMPLES

The lyophilized bacteria strains employed in the following examples are:
- *Lactobacillus delbrueckii subsp. bulgaricus AY*/*CSL*: LMG P-17224
- *Streptococcus thermophilus 9Y*/*CSL*: LMG P-17225
- *Bifidobacterium longum BI10*/*CSL*: LMG P-17500
- *Bifidobacterium breve Bbr8*/*CSL*: LMG P-17501
- *Lactobacillus casei 101*/*37*/*CLS*: LMG P-17504
- *Bifidobacterium infantis BI1*/*CSL*: LMG P-17502
- *Lactobacillus acidophilus K8*/*CSL*: LMG P-17503.

Said bacteria strains denoted by "LMG P" have been deposited with the recognized international institution BCCM/LMG collection of the University of Gent, Ledeganokstraat 35, B-9000 Gent, Belgium.

### EXAMPLE 1

An apple purée is prepared starting from fresh or frozen raw materials. The apple purée is indirectly heated to a temperature of 55°C, chopped and sieved with a two-stage milling machine.

Thus a purée which is refined and homogeneous to 0.6 mm is produced, to which 7.5% of a powder of active substances of the wheat germ is added.

The matrix (vegetable substrate) is first submitted to an outgassing treatment, to a negative pressure of 500 mmHg, and subsequently to a thermal sanification treatment to 80°C for a period of time of 4 minutes. Outgassing enables elimination of oxygen and limits thermal and oxidative damages to which macro and micronutrients are submitted during the pasteurisation step.

During the cooling step, to a temperature of 60°C, a further step is provided in which the following micronutrients are added:
vitamin E 0.01%
vitamin C 0.06%
calcium lactate 2.3%.

The vegetable substrate is then cooled to a temperature of 38°C and inoculated, in a proportion of 5 g of ferments per 100 kg, with a lyophilized ferment mixture made up as follows:
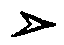 *Lactobacillus acidophilus* 30%
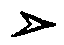 *Lactobacillus casei* 30%
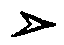 *Bifidobacterium infantis, Bifidobacterium breve, Bifidobacterium longum* 40%

Fermentation is carried out to a temperature of 38°C over 20 hours, subsequently the fermented vegetable food (or fermented vegetable substrate) is cooled under stirring to 20°C and mixed in a proportion of 20% with a yoghurt prepared as specified below.

Cow milk is standardized in its fat and protein contents (4.6% and 3.6%, respectively), added with sucrose in an amount of 5%, pasteurized to a temperature of 85°C over 30 minutes, cooled to 42°C and inoculated, in a proportion of 3 g of ferments per 100 litres of standardized and sugared milk, with a ferment mixture made up as follows:
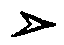 *Lactobacillus delbrueckii subsp. bulgaricus* 20%
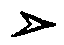 *Streptococcus thermophilus* 80%.

Fermentation is carried out to a temperature of 42°C for a time necessary to reach a final pH of 4.3 (about 8 hours), then the milk curd is broken and cooled under stirring until 15°C and mixed, after a smoothing treatment, with the fermented vegetable food, prepared as above specified, in a ratio of 80 parts of yoghurt and 20 parts of fermented vegetable food, thereby obtaining a functional combined food of a new generation.

The combined food thus obtained is packaged in jars of plastic material (polypropylene) with a capacity of 125 g, closed with a heat-sealed aluminium crown cap and cooled to 4°C in a refrigerating room.

### EXAMPLE 2

A pear purée is prepared starting from fresh or frozen raw materials following the same modalities as in Example 1.

Thus a purée which is refined and homogeneous to 0.6 mm is produced.

The matrix (vegetable substrate) is submitted to an outgassing treatment, a thermal sanification treatment and a pasteurization step, as pointed out in Example 1.

During the cooling step, to a temperature of 60°C, a further step of adding the following micronutrients is provided:
vitamin E 0.01%
vitamin C 0.06%
calcium lactate 2.3%.

The vegetable substrate is then cooled to a temperature of 38°C and inoculated, in a proportion of 5 g of ferments per 100 kg, with a mixture of lyophilized ferments made up as follows:
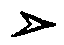 *Lactobacillus acidophilus* 20%;
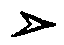 *Lactobacillus casei* 10%;
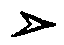 *Bifidobacterium infantis, Bifidobacterium breve, Bifidobacterium longum* 50%;
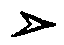 *Streptococcus thermophilus* 10%; and
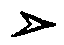 *Lactobacillus bulgaricus* 10%.

Fermentation is carried out to a temperature of 38°C over 20 hours, subsequently the fermented vegetable food (or fermented vegetable substrate) is cooled under stirring to 20°C and mixed in a proportion of 20% to a yoghurt prepared as in Example 1.

Practically, the fermented vegetable food, prepared as above specified, is dispersed, in a ratio of 80 parts of yoghurt and 20 parts of fermented vegetable food, to form a functional combined food of a new generation.

The combined food thus obtained is packaged and preserved as in Example 1.

### EXAMPLE 3

A carrot purée is prepared starting from fresh or frozen raw materials as specified in Example 1.

Thus a carrot purée which is refined and homogeneous to 0.6 mm is produced, to which 6.0% of a powder of active substances of the wheat germ is added.

The matrix (vegetable substrate) is submitted to an outgassing treatment, a thermal sanification treatment and a pasteurization step, as in Example 1.

During the cooling step, to a temperature of 60°C, a further step in which the following micronutrients are added is provided:
vitamin E 0.01%
vitamin C 0.06%
calcium lactate 2.3%.

The vegetable substrate is then cooled to a temperature of 38°C and inoculated, in a proportion of 6 g of ferments per 100 kg, with a lyophilized ferment mixture made up of:
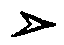 *Lactobacillus acidophilus* 30%;
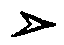 *Lactobacillus casei* 30%;
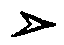 *Bifidobacterium infantis, Bifidobacterium breve, Bifidobacterium longum* 40%;

Fermentation is carried out to a temperature of 38°C over 20 hours, subsequently the fermented vegetable food (or fermented vegetable substrate) is cooled under stirring to 20°C and mixed in a proportion of 20% with a yoghurt prepared as in Example 1.

Practically, the fermented vegetable food prepared as above specified, is dispersed in a ratio of 80 parts of yoghurt and 20 parts of fermented vegetable food to form a functional combined food of a new generation.

The combined food thus obtained is packaged and preserved as in Example 1.

### EXAMPLE 4

A carrot purée is prepared starting from fresh or frozen raw materials as specified in Example 1.

Thus a purée is produced which is refined and homogeneous to 0.6 mm.

The matrix (vegetable substrate) is submitted to an outgassing treatment, a thermal treatment and a pasteurization treatment as pointed out in Example 1.

During the cooling step, to a temperature of 60°C, a further step of adding the following micronutrients is provided:
vitamin E 0.01%
vitamin C 0.08%
calcium lactate 2.0%
mineral salts and trace elements 0.2%, phosphor, selenium, magnesium and potassium.

The vegetable substrate is then cooled to a temperature of 38°C and inoculated in a proportion of 7 g of ferments per 100 kg, with a mixture of lyophilized ferments made up as follows:
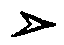 *Lactobacillus acidophilus* 20%;
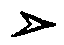 *Lactobacillus casei* 10%;
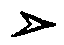 *Bifidobacterium infantis, Bifidobacterium breve, Bifidobacterium longum* 50%;
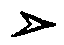 *Streptococcus thermophilus* 10%; and
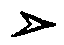 *Lactobacillus bulgaricus* 10%.

Fermentation is carried out to a temperature of 38°C over 20 hours, subsequently the fermented vegetable food (or fermented vegetable substrate) is cooled under stirring to 20°C and mixed in a proportion of 20% with a yoghurt prepared as in Example 1.

Practically, the fermented vegetable food prepared as above specified, is dispersed in a ratio of 80 parts of yoghurt and 20 parts of fermented vegetable food to form a functional combined food of a new generation.

The combined food thus obtained is packaged and preserved as in Example 1.

### EXAMPLE 5

An apple and carrot purée in a ratio of 1:1 is prepared starting from fresh or frozen raw materials that are indirectly heated to a temperature of 55°C, chopped and sieved with a two-stage milling machine. Thus a purée is produced which is refined and homogeneous to 0.6 mm, to which 5.0% of a powder of active substances of the wheat germ is added.

The mixture (vegetable substrate) is first submitted to an outgassing treatment to a negative pressure of 500 mmHg, and subsequently to a thermal sanification treatment to 80°C for a period of time of 4 minutes. Outgassing allows elimination of oxygen and limits the thermal and oxidative damages to which macro and micronutrients are submitted during the pasteurisation step.

During the cooling step, to a temperature of 60°C, the following micronutrients are added:
vitamin E 0.01%
vitamin C 0.06%
calcium lactate 2.0%
mineral salts and trace elements 0.3%; phosphor, zinc, iron, selenium.

The vegetable substrate is then cooled to a temperature of 35°C and inoculated, in a proportion of 8 g of ferments per 100 kg, with a lyophilized-ferment mixture made up as follows:
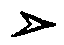 *Lactobacillus acidophilus* 30%;
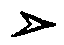 *Lactobacillus casei* 30%; and
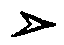 *Bifidobacterium infantis, Bifidobacterium breve, Bifidobacterium longum* 40%

Fermentation is carried out to a temperature of 38°C over 20 hours, subsequently the fermented vegetable substrate is cooled under stirring to 20°C and mixed in a proportion of 20% with a yoghurt prepared as specified below.

Cow milk is standardized in its fat and protein contents (4.6% and 3.6%, respectively), added with sacrose in an amount of 5%, pasteurized to a temperature of 85°C over 30 minutes, cooled to 42°C and inoculated, in a proportion of 3 g of ferments per 100 litres of standardized and sugared milk, with a ferment mixture made up as follows:
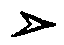 *Lactobacillus delbrueckii subsp. bulgaricus* 20%
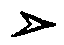 *Streptococcus thermophilus* 80%.

Fermentation is carried out to a temperature of 40°C for a time necessary to reach a final pH of 4.3 (about 8 hours), then the milk curd is broken and cooled under stirring until 15°C and mixed, after a smoothing treatment, with the fermented vegetable food, prepared as above specified, in a ratio of 80 parts of yoghurt and 20 parts of fermented vegetable food, thereby obtaining a functional combined food of a new generation.

The combined food thus obtained is packaged in jars of plastic material (polypropylene) with a capacity of 125 g, closed with a heat-sealed aluminium crown cap and cooled to 4°C in a refrigerating room.

## Claims

1. A process for preparing a fermented vegetable food, comprising a step of pasteurizing a vegetable matrix, **characterized in that** said process comprises the following further steps of:
- adding to the vegetable matrix a mixture comprising
- *Lactobacillus acidophilus;*
- *Lactobacillus casei;*
- *Bifidobacterium infantis;*
- *Bifidobacterium breve;* and
- *Bifidobacterium longum*;
- fermenting the vegetable matrix containing the lactic bacteria and bifidobacteria to obtain a fermented vegetable food comprising the active substances formed by bacteria fermentation on the vegetable matrix.

2. A process as claimed in claim 1, **characterized in that** the vegetable matrix comprises one or more vegetable substrates selected from the group consisting of cereals, fruit and vegetables.

3. A process as claimed in claim 2, **characterized in that** the vegetable substrate is selected from apple purée, pear purée, carrot purée and wheat germ.

4. A process as claimed in claim 1, **characterized in that** said mixture of bacteria strains consists of:
- *Lactobacillus acidophilus,* from 20 to 40% by weight of mixture;
- *Lactobacillus casei,* from 20 to 40% by weight of mixture;
- *Bifidobacterium infantis, Bifidobacterium breve* and *Bifidobacterium longum,* from 20 to 60 % by weight of mixture.

5. A process as claimed in one or more of the preceding claims, **characterized in that** said mixture of bacteria strains consists of:
- *Lactobacillus delbrueckii subsp. bulgaricus;*
- *Streptococcus thermophilus;*
- *Lactobacillus acidophilus;*
- *Lactobacillus casei;*
- *Bifidobacterium infantis;*
- *Bifidobacterium breve;* and
- *Bifidobacterium longum.*

6. A process as claimed in one or more of the preceding claims, **characterized in that** the lactic bacteria and bifidobacteria are present in the following concentrations:
- the lyophilized culture of *Lactobacillus delbrueckii subsp. bulgaricus* is at least 20 thousand million CFU/g of lyophilized matter;
- the lyophilized culture of *Streptococcus thermophilus* is at least 50 thousand million CFU/g of lyophilized matter;
- the lyophilized culture of *Lactobacillus acidophilus* is at least 50 thousand million CFU/g of lyophilized matter;
- the lyophilized culture of *Lactobacillus casei* is at least 50 thousand million CFU/g of lyophilized matter;
- the lyophilized culture of *Bifidobacterium infantis, Bifidobacterium breve* and *Bifidobacterium longum* is at least 50 thousand million CFU/g of lyophilized metter.

7. A process as claimed in one or more of the preceding claims, **characterized in that** the fermentation step is carried out over a period of time included between 5 and 25 hours and to a temperature in the range of 30 to 45°C.

8. A fermented vegetable food, **characterized in that** it comprises the following components:
- one or more vegetable substrates, fermented with a mixture of selected bacteria, chosen from the group consisting of cereals, fruit and vegetables;
- the mixture of selected bacteria comprising
- *Lactobacillus acidophilus*;
- *Lactobacillus casei*;
- *Bifidobacterium infantis*;
- *Bifidobacterium breve*; and
- *Bifidobacterium longum*; and
- one or more active substances formed from fermentation belonging to the group comprising: formed from lactic acid, some bioactive peptides, essential amino acids such as arginine and lysine, fatty acids in short chains such as acetic acid, propionic acid and butyric acid, monosaccharides and oligosaccharides such as glucose, fructose, sucrose, melitose, vitamins of group B, vitamin E and folic acid, mineral salts/trace elements such as potassium, magnesium and phosphor.

9. A food as claimed in claim 8, **characterized in that** the fermented vegetable substrate is selected from apple purée, pear purée, carrot purée and wheat germ.

10. A food as claimed in claim 8, **characterized in that** said mixture of bacteria strains consists of:
- *Lactobacillus acidophilus,* from 20 to 40% by weight of mixture;
- *Lactobacillus casei,* from 20 to 40% by weight of mixture;
- *Bifidobacterium infantis, Bifidobacterium breve* and *Bifidobacterium longum,* from 20 to 60 % by weight of mixture.

11. A food as claimed in one or more of the preceding claims, **characterized in that** said mixture of bacteria strains consists of:
- *Lactobacillus delbrueckii subsp. bulgaricus;*
- *Streptococcus thermophilus;*
- *Lactobacillus acidophilus;*
- *Lactobacillus casei;*
- *Bifidobacterium infantis;*
- *Bifidobacterium breve;* and
- *Bifidobacterium longum.*

12. A food as claimed in one or more of the preceding claims 8 to 11, **characterized in that** the lactic bacteria and bifidobacteria have the following concentrations:
- the lyophilized culture-of *Lactobacillus delbrueckii subsp. bulgaricus* is included between 10 and 100 million CFU/g of fermented vegetable food;
- the lyophilized culture of *Streptococcus thermophilus* is included between 10 and 100 million CFU/g of fermented vegetable food;
- the lyophilized culture of *Lactobacillus acidophilus* is included between 10 and 100 million CFU/g of fermented vegetable food;
- the lyophilized culture of *Lactobacillus casei* is included between 10 and 100 million CFU/g of fermented vegetable food;
- the lyophilized culture of *Bifidobacterium infantis, Bifidobacterium breve,* and *Bifidobacterium longum* is included between 10 and 100 million CFU/g of fermented vegetable food.

13. A process for preparing a combined food, said combined food comprising a fermented milk-based product and a fermented vegetable food, said process comprising a step of pasteurising a vegetable matrix, **characterized in that** said process comprises the following further steps of:
- adding to the vegetable matrix, a mixture comprising
- *Lactobacillus acidophilus;*
- *Lactobacillus casei;*
- *Bifidobacterium infantis;*
- *Bifidobacterium breve;* and
- *Bifidobacterium longum*;
- fermenting the vegetable matrix containing the lactic bacteria and bifidobacteria to obtain a fermented vegetable food comprising the active substances formed from bacteria fermentation on the vegetable matrix; and
- dispersing said fermented vegetable food in a fermented milk-based product.

14. A process as claimed in claim 13, **characterized in that** the vegetable matrix comprises at least one vegetable substrate selected from apple purée, pear purée, carrot purée and wheat germ.

15. A process as claimed in claim 13, **characterized in that** said mixture of bacteria strains consists of:
- *Lactobacillus acidophilus,* from 20 to 40% by weight of mixture;
- *Lactobacillus casei,* from 20 to 40% by weight of mixture;
- *Bifidobacterium infantis, Bifidobacterium breve* and *Bifidobacterium longum,* from 20 to 60 % by weight of mixture.

16. A food as claimed in one or more of the preceding claims, **characterized in that** said mixture of bacteria strains consists of:
- *Lactobacillus delbrueckii subsp. bulgaricus;*
- *Streptococcus thermophilus;*
- *Lactobacillus acidophilus;*
- *Lactobacillus casei;*
- *Bifidobacterium infantis;*
- *Bifidobacterium breve;* and
- *Bifidobacterium longum.*

17. A process as claimed in one or more of the preceding claims 13 to 16, **characterized in that** the lactic bacteria and bifidobacteria have the following concentrations:
- the lyophilized culture of *Lactobacillus delbrueckii subsp. bulgaricus* is at least 20 million CFU/g of lyophilized matter;
- the lyophilized culture of *Streptococcus thermophilus* is at least 50 million CFU/g of lyophilized matter;
- the lyophilized culture of *Lactobacillus acidophilus* is at least million CFU/g of lyophilized matter;
- the lyophilized culture of *Lactobacillus casei* is at least 50 million CFU/g of lyophilized matter;
- the lyophilized culture of *Bifidobacterium infantis*, *Bifidobacterium breve, Bifidobacterium longum* is at least 50 million CFU/g of lyophilized matter.

18. A process as claimed in one or more of the preceding claims 13 to 17, **characterized in that** the fermentation step is' carried out over a period of time included between 5 and 25 hours to a temperature in the range of 30 to 45°C.

19. A process as claimed in one or more of the preceding claims 13 to 18, **characterized in that** a fermented milk-based product is selected from fermented milk derivatives or milk added with lactobaccilli or bifidobacteria.

20. A combined food comprising a fermented milk-based product and a fermented vegetable food, **characterized in that** it comprises the following components:
- a fermented milk-based product;
- the fermented vegetable food as claimed in anyone claims 8-12.

21. A food as claimed in claim 20,**characterized in that** said fermented milk-based product is selected from fermented milk derivatives or milk added with lactic bacteria or bifidobacteria.

22. Use of a mixture of selected bacteria comprising
- *Lactobacillus acidophilus;*
- *Lactobacillus casei;*
- *Bifidobacterium infantis;*
- *Bifidobacterium breve;* and
- *Bifidobacterium longum*
in a fermentation process of vegetable matrices.

## Patentansprüche

1. Ein Verfahren für die Zubereitung eines fermentierten, pflanzlichen Lebensmittels, umfassend einen Pasteurisierungsschritt einer pflanzlichen Matrix, **dadurch gekennzeichnet, dass** dieses Verfahren die folgenden, weiteren Schritte umfasst:
- Hinzufügen an die pflanzliche Matrix einer Mischung umfassend:
• Lactobacillus acidophilus;
• Lactobacillus casei;
• Bifidobacterium infantis;
• Bifidobacterium breve; und
• Bifidobacterium longum;
- Fermentieren der die Milchbakterien und Bifidobakterien enthaltenden pflanzliche Matrix um ein pflanzliches Lebensmittel zu erhalten, umfassend die aktiven Stoffe, die aus der Fermentierung der Bakterien an der pflanzlichen Matrix gebildet wurden.

2. Das Verfahren gemäß Anspruch 1, **dadurch gekennzeichnet, dass** die pflanzliche Matrix einen oder mehrere pflanzliche Substrate umfasst, die aus der Gruppe bestehend aus Getreide, Früchten und Gemüse gewählt wird.

3. Das Verfahren nach Anspruch 2, **dadurch gekennzeichnet, dass** das pflanzliche Substrat unter Apfelbrei, Birnenbrei, Karottenbrei und Weizenkeim gewählt wird.

4. Das Verfahren nach Anspruch 1, **dadurch gekennzeichnet, dass** die
Bakterienstämmemischung besteht aus:
• Lactobacillus acidophilus, von 20 bis 40 Gewichtsprozent der Mischung;
• Lactobacillus casei, von 20 bis 40 Gewichtsprozent der Mischung;
• Bifidobacterium infantis, Bifidobacterium breve e Bifidobacterium longum, von 20 bis 60 Gewichtsprozent der Mischung.

5. Das Verfahren nach einem oder mehreren voranstehenden Ansprüchen, **dadurch gekennzeichnet, dass** die
Bakterienstämmemischung besteht aus
• Lactobacillus delbrueckii subsp. bulgaricus;
• Streptococcus thermophilus;
• Lactobacillus acidophilus;
• Lactobacillus casei;
• Bifidobacterium infantis;
• Bifidobacterium breve; und
• Bifidobacterium longum.

6. Verfahren nach einem oder mehreren der vorstehenden Ansprüche, **dadurch gekennzeichnet, dass** die Milchbakterien und die Bifidobakterien unter folgenden Konzentrationen anwesend sind:
- die gefriergetrocknete Kultur des Lactobacillus delbrueckii subsp.bulgaricus ist mindestens 20 Milliarden CFU/g vom Gefriergetrockneten;
- die gefriergetrocknete Kultur des Streptococcus.thermophilus ist mindestens 50 Milliarden CFU/g vom Gefriergetrockneten;
- die gefriergetrocknete Kultur des Lactobacillus acidophilus ist mindestens 50 Milliarden CFU/g vom Gefriergetrockneten;
- die gefriergetrocknete Kultur des Lactobacillus casei ist mindestens 50 Milliarden CFU/g vom Gefriergetrockneten;
- die gefriergetrocknete Kultur der Bifidobacterium infantis, Bifidobacterium breve und Bifidobacterium longum ist mindestens 50 Milliarden CFU/g vom Gefriergetrockneten.

7. Das Verfahren nach einem oder mehreren der vorstehenden Ansprüche, **dadurch gekennzeichnet, dass** der Schritt des Fermentierens für eine Zeitspanne von 5 bis 25 Stunden und einer Temperatur von 30 bis 45° C geführt wird.

8. Ein fermentiertes, vegetarisches Lebensmittel, **dadurch gekennzeichnet, dass** es folgende Bestandteile umfasst:
- einen oder mehrere pflanzliche Substrate, fermentiert mit einer Mischung von ausgewählten Bakterien, gewählt aus der Gruppe bestehend aus Getreide, Früchten und Gemüse; wobei
- die Mischung von ausgewählten Bakterien umfasst:
• Lactobacillus acidophilus;
• Lactobacillus casei;
• Bifidobacterium infantis;
• Bifidobacterium breve; und
• Bifidobacterium longum; und
- einen oder mehrere aktive Stoffe die aus der Fermentation gebildet werden, die der Gruppe angehören, umfassend: Milchsäure, einige bioaktive Peptide, essenzielle Aminosäuren wie Arginin und Lysin, Fettsäuren kurzer Kette, wie Essigsäure, Propionsäure und Buttersäure, Monosacharide und Oligosacharide wie Glukose, Fruktose, Sachorose, Raffinose, Vitamine der Gruppe B, Vitamin E und Folsäure, Mineralsalze/Spurenelemente wie Kalium, Magnesium und Phosphor.

9. Das Lebensmittel nach Anspruch 8, **dadurch gekennzeichnet, dass** das fermentierte pflanzliche Substrat gewählt wird unter Apfelbrei, Birnenbrei, Karottenbrei und Weizenkeim.

10. Das Lebensmittel nach Anspruch 8, **dadurch gekennzeichnet, dass** die
Bakterienstämmemischung besteht aus:
• Lactobacillus acidophilus, von 20 bis 40 Gewichtsprozent der Mischung;
• Lactobacillus casei, von 20 bis 40 Gewichtsprozent der Mischung;
• Bifidobacterium infantis, Bifidobacterium breve und Bifidobacterium longum, von 20 bis 60 Gewichtsprozent der Mischung.

11. Das Verfahren nach einem oder mehreren voranstehenden Ansprüchen, **dadurch gekennzeichnet, dass** die
Bakterienstämmemischung besteht aus
• Lactobacillus delbrueckii subsp. bulgaricus;
• Streptococcus thermophilus;
• Lactobacillus acidophilus;
• Lactobacillus casei;
• Bifidobacterium infantis;
• Bifidobacterium breve; und
• Bifidobacterium longum.

12. Das Lebensmittel nach einem oder mehreren der vorstehenden Ansprüche von 8 bis 11, **dadurch gekennzeichnet, dass** die Milchbakterien und die Bifidobakterien die folgenden Konzentrationen haben:
- die gefriergetrocknete Kultur des Lactobacillus delbrueckii subsp.bulgaricus ist zwischen 10 und 100 Millionen CFU/g des fermentierten vegetarischen Lebensmittels;
- die gefriergetrocknete Kultur des Streptococcus thermophilus liegt zwischen 10 und 100 Millionen CFU/g des fermentierten pflanzlichen Lebensmittels;
- die gefriergetrocknete Kultur des Lactobacillus acidophilus liegt zwischen 10 und 100 Millionen CFU/g des fermentierten pflanzlichen Lebensmittels;
- die gefriergetrocknete Kultur des Lactobacillus casei liegt zwischen 10 und 100 Millionen CFU/g des fermentierten vegetarischen Lebensmittels;
- die gefriergetrocknete Kultur der Bifidobacterium infantis, Bifidobacterium breve und Bifidobacterium longum liegt zwischen 10 und 100 Millionen CFU/g des fermentierten vegetarischen Lebensmittels.

13. Ein Verfahren für die Zubereitung eines kombinierten Lebensmittels, wobei das kombinierte Lebensmittel ein Erzeugnis auf der Basis von fermentierter Milch und ein fermentiertes, vegetarisches Lebensmittel umfasst, wobei das Verfahren einen Pasteurisierungsschritt einer vegetarischen Matrix umfasst, **dadurch gekennzeichnet, dass** das Verfahren die folgenden weiteren Schritte umfasst:
- Hinzufügen zur vegetarischen Matrix einer Mischung umfassend:
• Lactobacillus acidophilus;
• Lactobacillus casei;
• Bifidobacterium infantis;
• Bifidobacterium breve; und
• Bifidobacterium longum; und
- Fermentieren der vegetarischen, die Milchbakterien und die Bifidobakterien enthaltenden Matrix um ein Fermentiertes, vegetarisches Lebensmittel zu erhalten, umfassend die aktiven Stoffe, die aus der Fermentierung der Bakterien auf der vegetarischen Matrix gebildet wurden; und
- Disperdieren des fermentierten, pflanzlichen Lebensmittels in einem Erzeugnis auf der Basis von fermentierter Milch.

14. Verfahren nach Anspruch 13, **dadurch gekennzeichnet, dass** die pflanzliche Matrix mindestens ein pflanzlichen Substrat umfasst, gewählt unter Apfelbrei, Birnenbrei, Karottenbrei und Weizenkeim.

15. Das Verfahren nach Anspruch 13, **dadurch gekennzeichnet, dass** die
Bakterienstämmemischung besteht aus:
• Lactobacillus acidophilus, von 20 bis 40 Gewichtsprozent der Mischung;
• Lactobacillus casei, von 20 bis 40 Gewichtsprozent der Mischung;
• Bifidobacterium infantis, Bifidobacterium breve und Bifidobacterium longum, von 20 bis 60 Gewichtsprozent der Mischung.

16. Lebensmittel nach einem oder mehreren der voranstehenden Ansprüchen, **dadurch gekennzeichnet, dass** die
Bakterienstämmemischung besteht aus
• Lactobacillus delbrueckii subsp. bulgaricus;
• Streptococcus thermophilus;
• Lactobacillus acidophilus;
• Lactobacillus casei;
• Bifidobacterium infantis;
• Bifidobacterium breve; und
• Bifidobacterium longum.

17. Das Verfahren nach einem oder mehreren der vorstehenden Ansprüche von 13 bis 16, **dadurch gekennzeichnet, dass** die Milchbakterien und die Bifidobakterien die folgenden Konzentrationen haben:
- die gefriergetrocknete Kultur des Lactobacillus delbrueckii subsp.bulgaricus ist mindestens 20 Millionen CFU/g vom Gefriergetrockneten;
- die gefriergetrocknete Kultur des Streptococcus thermophilus ist mindestens 50 Millionen CFU/g vom Gefriergetrockneten;
- die gefriergetrocknete Kultur des Lactobacillus acidophilus ist mindestens 50 Millionen CFU/g vom Gefriergetrockneten;
- die gefriergetrocknete Kultur des Lactobacillus casei ist mindestens 50 Millionen CFU/g vom Gefriergetrockneten;
- die gefriergetrocknete Kultur der Bifidobacterium infantis, Bifidobacterium breve und Bifidobacterium longum ist mindestens 50 Millionen CFU/g vom Gefriergetrockneten.

18. Das Verfahren nach einem oder mehreren der vorstehenden Ansprüche von 13 bis 17, **dadurch gekennzeichnet, dass** der Fermentierungsschritt für eine Zeitdauer zwischen 5 und 25 Stunden bei einer Temperatur zwischen 30 und 45° C geführt wird.

19. Das Verfahren nach einem oder mehreren der vorstehenden Ansprüche von 13 bis 18, **dadurch gekennzeichnet, dass** ein Erzeugnis auf der Basis von fermentierter Milch unter den Folgeprodukten der fermentierten Milch oder Milch ist, der Milchbakterien oder Bifidobakterien zugesetzt wurden.

20. Kombiniertes Lebensmittel umfassend ein Erzeugnis auf der Basis von fermentierter Milch und ein fermentiertes, pflanzliches Lebensmittel, **dadurch gekennzeichnet, dass** es folgende Bestandteile umfasst:
- ein Erzeugnis auf der Basis von fermentierter Milch;
- das fermentierte, pflanzliche Lebensmittel nach einem beliebigen der Ansprüche von 8 bis 12.

21. Lebensmittel nach Anspruch 20, **dadurch gekennzeichnet, dass** das Erzeugnis auf der Basis von fermentierter Milch gewählt ist, unter den Folgeprodukten der fermentierten Milch oder von Milch, der Milchbakterien oder Bifidobakterien zugesetzt wurden.

22. Verwendung einer Bakterienmischung umfassend:
• Lactobacillus acidophilus;
• Lactobacillus casei;
• Bifidobacterium infantis;
• Bifidobacterium breve; und
• Bifidobacterium longum;
in einem Fermentierungsverfahren von pflanzlichen Matrixen.

## Revendications

1. Un procédé pour la préparation d'un aliment végétal fermenté, comprenant une étape de pasteurisation d'une matrice végétale, **caractérisé en ce que** ledit procédé comporte les étapes supplémentaires suivantes:
- additionner à la matrice végétale un mélange comprenant:
· *Lactobacillus acidophilus;*
· *Lactobacillus casei;*
· *Bifidobacterium infantis;*
· *Bifidobacterium breve;* et
· *Bifidobacterium longum;*
- fermenter la matrice végétale contenant les bactéries lactiques et les bifidobactéries pour obtenir un aliment végétal fermenté comprenant les substances actives qui se sont formées par la fermentation des bactéries sur la matrice végétale.

2. Le procédé selon la revendication 1, **caractérisé en ce que** la matrice végétale comporte un ou plusieurs substrats végétaux choisis parmi le groupe se composant de céréales, fruits et légumes.

3. Le procédé selon la revendication 2, **caractérisé en ce que** le substrat végétal est choisi parmi purée de pomme, purée de poire, purée de carotte et germe de blé.

4. Le procédé selon la revendication 1, **caractérisé en ce que** ledit mélange de souches bactériennes consiste en:
· *Lactobacillus acidophilus,* de 20 à 40% en poids du mélange;
· *Lactobacillus casei,* de 20 à 40% en poids du mélange;
· *Bifidobacterium infantis, Bifidobacterium breve* et *Bifidobacterium longum,* de 20 à 60% en poids du mélange.

5. Le procédé selon une ou plusieurs des revendications précédentes, **caractérisé en ce que** ledit mélange de souches bactériennes consiste en:
· *Lactobacillus delbrueckii subsp.bulgaricus;*
· *Streptococcus thermophilus*;
· *Lactobacillus acidophilus*;
· *Lactobacillus casei;*
· *Bifidobacterium infantis;*
· *Bifidobacterium breve;* et
· *Bifidobacterium longum*.

6. Le procédé selon une ou plusieurs des revendications précédentes, **caractérisé en ce que** les bactéries lactiques et les bifidobactéries sont présentes aux concentrations suivantes:
- la culture lyophilisée de *Lactobacillus delbrueckii subsp.bulgaricus* est au moins 20 milliards CFU/g de lyophilisat;
- la culture lyophilisée de *Streptococcus thermophilus* est au moins 50 milliards CFU/g de lyophilisat;
- la culture lyophilisée de *Lactobacillus acidophilus* est au moins 50 milliards CFU/g de lyophilisat;
- la culture lyophilisée de *Lactobacillus casei* est au moins 50 milliards CFU/g de lyophilisat;
- la culture lyophilisée de *Bifidobacterium infantis, Bifidobacterium breve,* et *Bifidobacterium longum* est au moins 50 milliards CFU/g de lyophilisat.

7. Le procédé selon une ou plusieurs des revendications précédentes, **caractérisé en ce que** l'étape de fermentation est conduite pendant une période de temps comprise entre 5 et 25 heures et à une température dans la gamme de 30 à 45°C.

8. Un aliment végétal fermenté, **caractérisé en ce qu'**il comporte les éléments composants suivants:
- un ou plusieurs substrats végétaux, fermentés avec un mélange de bactéries sélectionnées, choisies parmi le groupe se composant de céréales, fruits et légumes;
- le mélange de bactéries sélectionnées comprenant:
· *Lactobacillus acidophilus;*
· *Lactobacillus casei;*
· *Bifidobacterium infantis;*
· *Bifidobacterium breve;* et
· *Bifidobacterium longum;* et
- une ou plusieurs substances actives qui se sont formées à la suite de la fermentation, appartenant au groupe comprenant: acide lactique, quelques peptides bioactifs, aminoacides essentiels tels qu'arginine et lysine, acides gras à courte chaîné comme acide acétique, acide propionique et acide butyrique, monosaccharides et oligosaccharides comme glucose, fructose, saccharose, mélitose, vitamines du groupe B, vitamine E et acide folique, sels minéraux/oligo-éléments comme potassium, magnésium et phosphore.

9. L'aliment selon la revendication 8, **caractérisé en ce que** le substrat végétal fermenté est choisi parmi purée de pomme, purée de poire, purée de carotte et germé de blé.

10. L'aliment selon la revendication 8, **caractérisé en ce que** ledit mélange de souches bactériennes consiste en:
· *Lactobacillus acidophilus,* de 20 à 40% en poids du' mélange;
· *Lactobacillus casei,* de 20 à 40% en poids du mélange;
· *Bifidobacterium infantis, Bifidobacterium breve* et *Bifidobacterium longum,* de 20 à 60% en poids du mélange.

11. L'aliment selon une ou plusieurs des revendications précédentes, **caractérisé en ce que** ledit mélange de souches bactériennes consiste en:
· *Lactobacillus delbrueckii subsp.bulgaricus;*
· *Streptococcus thermophilus;*
· *Lactobacillus acidophilus;*
· *Lactobacillus casei;*
· *Bifidobacterium infantis;*
· *Bifidobacterium breve;* et
· *Bifidobacterium longum.*

12. L'aliment selon une ou plusieurs des revendications précédentes 8 à 11, **caractérisé en ce que** les bactéries lactiques et les bifidobactéries ont les concentrations suivantes:
- la culture lyophilisée de *Lactobacillus delbrueckii subsp.bulgaricus* est comprise entre 20 et 100 millions CFU/g d'aliment végétal fermenté;
- la culture lyophilisée de *Streptococcus thermophilus* est comprise entre 10 et 100 millions CFU/g d'aliment végétal fermenté;
- la culture lyophilisée de *Lactobacillus acidophilus* est,comprise entre 10 et 100 millions CFU/g d'aliment végétal fermenté;
- la culture lyophilisée de *Lactobacillus casei* est comprise entre 10 et 100 millions CFU/g d'aliment végétal fermenté;
- la culture lyophilisée de *Bifidobacterium infàntis, Bifidobacterium breve,* et *Bifidobacterium longum* est comprise entre 10 et 100 millions CFU/g d'aliment végétal fermenté.

13. Un procédé pour la préparation d'un aliment combiné, ledit aliment combiné comprenant un produit à base de lait fermenté et un aliment végétal fermenté, ledit procédé comprenant une étape de pasteurisation d'une matrice végétale, **caractérisé en ce que** ledit procédé comporte les étapes supplémentaires suivantes:
- additionner à la matrice végétale un mélange comprenant:
· *Lactobacillus acidophilus;*
· *Lactobacillus casei;*
· *Bifidobacterium infantis;*
· *Bifidobacterium breve; et*
· *Bifidobacterium longum;*
- fermenter la matrice végétale contenant les bactéries lactiques et les bifidobactéries pour obtenir un aliment végétal fermenté comprenant les substances actives qui se sont formées par la fermentation des bactéries sur la matrice végétale; et
- disperser ledit aliment végétal fermenté dans un produit à base de lait fermenté.

14. Le procédé selon la revendication 13, **caractérisé en ce que** la matrice végétale comporte au moins un substrat végétal choisi parmi purée de pomme, purée de poire, purée de carotte et germe de blé.

15. Le procédé selon la revendication 13, **caractérisé en ce que** ledit mélange de souches bactériennes consiste en:
· *Lactobacillus acidophilus,* de 20 à 40% en poids du mélange;
· *Lactobacillus casei,* de 20 à 40% en poids du mélange;
· *Bifidobacterium infantis, Bifidobacterium breve* et *Bifidobacterium longum,* de 20 à 60% en poids du mélange.

16. L'aliment selon une ou plusieurs des revendications précédentes, **caractérisé en ce que** ledit mélange de souches bactériennes consiste en:
· *Lactobacillus delbrueckii subsp.bulgaricus;*
· *Streptococcus thermophilus;*
· *Lactobacillus acidophilus;*
· *Lactobacillus casei;*
· *Bifidobacterium infantis;*
· *Bifidobacterium breve;* et
· *Bifidobacterium longum*.

17. Le procédé selon une ou plusieurs des revendications précédentes 13 à 16, **caractérisé en ce que** les bactéries lactiques et les bifidobactéries ont les concentrations suivantes:
- la culture lyophilisée de *Lactobacillus delbrueckii subsp.bulgaricus* est au moins 20 millions CFU/g de lyophilisat;
- la culture lyophilisée de *Streptococcus thermophilus* est au moins 50 millions CFU/g de lyophilisat
- la culture lyophilisée de *Lactobacillus acidophilus* est au moins 50 millions CFU/g de lyophilisat;
- la culture lyophilisée de *Lactobacillus casei* est au moins 50 millions CFU/g de lyophilisat;
- la culture lyophilisée de *Bifidobacterium infantis, Bifidobacterium breve,* et *Bifidobacterium longum* est au moins 50 millions CFU/g de lyophilisat.

18. Le procédé selon une ou plusieurs des revendications précédentes 13 à 17, **caractérisé en ce que** l'étape de fermentation est conduite pendant une période de temps comprise entre 5 et 25 heures à une température dans la gamme de 30 à 45°C.

19. Le procédé selon une ou plusieurs des revendications précédentes 13 à 18, **caractérisé en ce qu'**un produit à base de lait fermenté est choisi entre des dérivés du lait fermenté ou un lait additionné de bactéries lactiques ou de bifidobactéries.

20. Un aliment combiné comprenant un produit à base de lait fermenté et un aliment végétal fermenté, **caractérisé en ce qu'**il comporte les éléments composants suivants:
- un produit à base de lait fermenté;
- l'aliment végétal fermenté selon une quelconque des revendications 8 à 12.

21. L'aliment selon la revendication 20, **caractérisé en ce que** ledit produit à base de lait fermenté est choisi entre des dérivés du lait fermenté ou un lait additionné de bactéries lactiques ou de bifidobactéries.

22. Usage d'un mélange de bactéries sélectionnées comprenant:
· *Lactobacillus acidophilus;*
· *Lactobacillus casei;*
· *Bifidobacterium infantis;*
· *Bifidobacterium breve;* et
· *Bifidobacterium longum;*
dans un procédé de fermentation de matrices végétales.
